(19) Europäisches Patentamt
European Patent Office
Office européen des brevets

(11) EP 3 030 692 B1

(12) # EUROPÄISCHE PATENTSCHRIFT

(45) Veröffentlichungstag und Bekanntmachung des Hinweises auf die Patenterteilung:
**27.12.2017 Patentblatt 2017/52**

(21) Anmeldenummer: **14758780.2**

(22) Anmeldetag: **30.07.2014**

(51) Int Cl.:
***C23F 11/10*** (2006.01)
***C02F 1/20*** (2006.01)
***C02F 5/12*** (2006.01)
***C23F 11/14*** (2006.01)
***C23F 11/02*** (2006.01)

(86) Internationale Anmeldenummer:
**PCT/EP2014/002086**

(87) Internationale Veröffentlichungsnummer:
**WO 2015/018508 (12.02.2015 Gazette 2015/06)**

(54) **SYNERGETISCH WIRKENDE MISCHUNG ZUR VERWENDUNG ALS SAUERSTOFFBINDEMITTEL UND ALS KORROSIONSINHIBITOR IN WÄSRRIGEN SYSTEMEN**

SYNERGETIC ACTIVE-MIXTURE TO BE USED AS OXYGEN SCAVENGER AND CORROSION INHIBITOR IN WATER SYSTEMS

MÉLANGE ACTIVE SYNÉRGÉTIQUE UTILISÉE COMME CAPTEUR DE L'OXYGÈNE ET COMME INHBITEUR DE CORROSION DANS LES SYSTÈMES AQUEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2013 DE 102013013121**

(43) Veröffentlichungstag der Anmeldung:
**15.06.2016 Patentblatt 2016/24**

(73) Patentinhaber: **Kurita Water Industries Ltd.**
**Tokyo 164-0001 (JP)**

(72) Erfinder:
- **DE BACHE, Andre**
  **Tokyo 164-0001 (JP)**
- **HATER, Wolfgang**
  **41564 Kaarst (DE)**

(74) Vertreter: **Reitstötter Kinzebach**
**Patentanwälte**
**Im Zollhof 1**
**67061 Ludwigshafen (DE)**

(56) Entgegenhaltungen:
**US-A- 4 626 411 US-A- 4 728 497**

EP 3 030 692 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft eine synergistisch wirkende Mischung zur Verwendung als Sauerstoffbindemittel in Dampferzeugern, Kesseln, geschlossenen Kühlsystemen, Fernwärmeanlagen oder Heizungskreisläufen. Durch die Sauerstoffbindung wirkt die Mischung gleichzeitig als Korrosionsinhibitor.

In technischen Dampferzeugern und Kesseln, geschlossenen Kühlsystemen, Fernwärmeanlagen oder Heizungskreisläufen bei denen Metalle mit Wasser in Kontakt kommen, besteht die Gefahr der Korrosion. Die Korrosion wird hervorgerufen durch den in Wasser gelöstem Sauerstoff. Dieser Sauerstoff muss daher entfernt werden, entweder durch mechanisch-physikalische Methoden oder durch chemische Behandlung des Sauerstoffs. Es ist auch möglich, beide Methoden zu kombinieren, in dem man die physikalische Methode gleichzeitig mit den chemischen Methoden kombiniert.

Eine bekannte Methode besteht z.B. in der Kombination von thermischer Entgasung und Dosierung von sog. Sauerstoffbindemitteln, wie das bekannte Hydrazin, oder Natriumsulfit.

Natriumsulfit z.B. ist eine schwerflüchtige Verbindung, deren Reaktionsprodukte mit Sauerstoff zur Erhöhung der Leitfähigkeit des Kesselwassers beitragen und somit die Eindickung vor allem bei Anlagen, die mit vollentsalztem Wasser betrieben werden, verursacht. Deshalb wurde Hydrazin eingesetzt, weil die Reaktionsprodukte mit Sauerstoff die Leitfähigkeit des Kesselwassers nicht erhöhen.

Hydrazin aber, sowie auch die oft eingesetzten Verbindungen, wie Hydrochinon oder Methylethylketoxim, sind jedoch in Bezug auf die Arbeitssicherheit bedenklich, weil sie toxisch und kanzerogen sind. Anstelle von Hydrazin oder Ketoximen wurden im Laufe der Zeit einige Alternativen vorgeschlagen:

> In US 3,983,048 wurde zwar die Verwendung der Verbindung Hydrazin beschrieben, aber es werden dort neben Hydrazin auch Arylamine in katalytischen Mengen mit eingesetzt. Als Arylamine werden, gemäß Spalte 2, ortho oder para-Phenylendiamine eingesetzt. Die Sauerstoff-Entfernung beträgt nach Tabelle 1 dort nach 10 Minuten lediglich 95 % bei Einsatz von para-Phenylendiamin. Hier konnte durch die Reduktion der Menge an Hydrazin die toxikologische Bedenklichkeit jedoch nicht vollständig ausgeräumt werden.

In der US 4,728,497 wurde Hydrazin nun vollständig durch Aminophenole ersetzt. Als Verbindungsklasse sind sie weniger toxisch und weisen außerdem eine größere Sauerstoffbindungskapazität auf. Zu diesen Verbindungen zählen bspw. 2,4,-Diaminophenol, 5-Methyl-o-Aminophenol, o, oder p-Aminophenol bzw. deren Salze etc. Aus der Tabelle 1 dieser Schrift geht hervor, dass die Aminophenole zwar wirksamer als Hydrazin sind, sie können Sauerstoff bis zu 99 % bei vergleichbaren Bedingungen entfernen, aber dafür ist ihre Reaktionsgeschwindigkeit relativ langsam.

In der US 4,067,690 wurden N, N-Diethylhydroxylamin bzw. deren Salze als alternative Sauerstoffbindemittel zu Hydrazin mit geringem Gefährdungspotential vorgeschlagen.

So wurde beispielsweise, unter anderem im Vergleich mit Hydrazin oder Natriumsulfit, bei Einsatz von N,N-Diethylhydroxylamin /DEHA/ eine Verbesserung der Reduktion des gelösten Sauerstoffes von 96,8 auf 98 % erreicht. Als Katalysatoren mussten aber Hydrochinon, Benzochinon oder Metallsalze eingesetzt werden, um die Reaktionsgeschwindigkeit zu erhöhen. Die Verwendung dieser Verbindungen ist jedoch aufgrund ihrer Toxizität unerwünscht bzw. nachteilig. Auch die als Katalysatoren eingesetzten Metallsalze, wie Kupfer-oder Kobaltsalze, waren nachteilig, so verursachen sie Kontaktkorrosion oder einige Kobaltsalze sind kanzerogen.

Im Stand der Technik wurde weiterhin versucht DEHA in Kombination mit anderen, weniger toxischen Katalysatoren zu verbessern, vor allem weil DEHA eine relativ langsame Sauerstoffbindung aufweist, wurden in der EP 1 619 272 A1 heterocyclische Verbindungen, die N-substituierte Aminogruppen enthalten, vorgeschlagen, beispielsweise 1-Amino-4-methylpiperazin, 1-Aminopyrrolidin. Zu DEHA und den beiden genannten Verbindungen musste auch noch ein Katalysator auf Basis von mehreren Hydroxylgruppen enthaltenden Phenolen zugegeben werden.

Die Sauerstoffreduktion einer Mischung bestehend aus DEHA, 1-Aminopyrrolidon und Pyrogallol als Katalysator in der Tabelle 4 der EP 1 619 272 A1 zeigt eine Restkonzentration an Sauerstoff nach 20 Minuten von 0,3 mg/L.

Weder die Kombination von DEHA mit N-substituierte Aminogruppen enthaltenden heterocyclischen Verbindungen, noch die alleinige Verwendung von Aminophenolen brachte ein befriedigendes Resultat bei den in der Industrie vorherrschenden Bedingungen in Bezug auf Temperatur und Druck in den Dampferzeugern und vor allem auf die Notwendigkeit in Bezug auf die Schnelligkeit der Sauerstoffentfernung.

US 4,626,411 offenbart eine Mischung zur Entfernung von Sauerstoff und zur Verminderung der Korrosion in Boilern bestehend aus drei Komponenten a, b, und c, wobei Komponente a zu Komponente c im Verhältnis von 10:1 bis 1:10 und Komponente b zur Komponente c im Verhältnis von 10: 1 bis 1:100 vorliegt. Komponente a ist eine Hydroxylaminverbindung, Komponente b eine aromatische Verbindung, zum Beispiel Aminophenol, und Komponente c ist ein Amin, das zur Einstellung des pH-Wertes dient.

In Spalte 5, Zeilen 8 ff wird festgestellt, dass nur die Kombination von neutralisierendem Amin und Hydrochinon einen sehr überraschenden Effekt auf den Anstieg der Reaktionsrate oder Reaktionsgeschwindigkeit des N,N-Diethylhydroxylamins mit dem Sauerstoff bewirkt hat.

Die Verwendung von Hydrochinonen oder auch der Metallkatalysatoren waren jedoch aus Umweltgründen und toxikologischer Sicht nicht angezeigt.

Es hat sich überraschenderweise herausgestellt, dass die Verwendung einer Kombination von nur 2 Komponenten nämlich von einem Hydroxylamin, z.B. des N, N-Diethylhydroxylamins, als Komponente a mit einem Arylphenolderivat, z.B. 4-Aminophenol als Komponente b im Verhältnis von 6:1 bis 1:1,5, bevorzugt von 5:1 bis 1:1, unter den Bedingungen der industriellen Dampferzeuger, Widererwarten eine synergistische Wirkung bei der Sauerstoffentfernung und damit auch bei der Verminderung der Korrosion zeigt. Diese Kombination weist gegenüber den Einzelkomponenten eine deutlich verbesserte Reaktionsgeschwindigkeit, d.h. eine erhöhte Sauerstoffbindungsrate auf. Auf die Verwendung einer dritten Komponente, z.B. Chinone oder Hydrochinone, konnte so vorteilhafterweise verzichtet werden.

Die allg. Struktur bzw. Summenformel **(I)** der Hydroxylamine lautet:

**(I)** $HONR^1R^2$

wobei die Substituenten $R^1$ $R^2$ gleich oder verschieden sein können und haben die allg. Formel

$C_n H_{2n+1}$,

wobei n=1 bis 5, bevorzugt 1 bis 2, ist.

Die erfindungsgemäß einzusetzende Komponente a, kann z.B. N, N-Diethylhydroxylamin, sein, welche die Formel (II) hat:

**(II)**

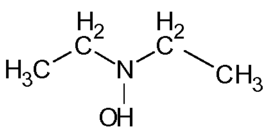

Die Komponente b, die Arylphenole haben die allgemeine Strukturformel **(III):**

**(III)**

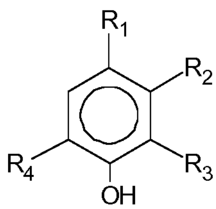

$R_1$, $R_2$, $R_3$ und $R_4$ sind dabei folgendermaßen definiert:

$R_1$, $R_2$, $R_3$ und $R_4$ stellen unabhängig voneinander

a) $C_mH_{2m+1}$-N(-$R_5$)(-$R_6$) oder
b) $OR_7$ oder
c) $R_8$

dar, wobei mindestens ein $R_1$, $R_2$, $R_3$ und $R_4$ eine Gruppe $C_mH_{2m+1}$-N(-$R_5$)(-$R_6$) ist. Dabei stellen $R_5$, $R_6$, $R_7$, $R_8$ jeweils unabhängig voneinander $C_nH_{2n+1}$ dar und n und m ganze Zahlen von 0 bis 4, bevorzugt ganze Zahlen von 0 bis 2 sind.

Erfindungsgemäße und bevorzugte Arylphenolverbindungen sind:

4-Aminophenol und 2-Aminophenol

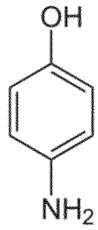

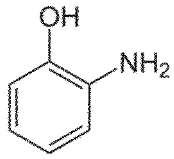

3-Amino-4-methylphenol und 4-Amino-3-methylphenol

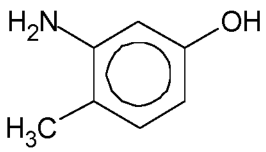

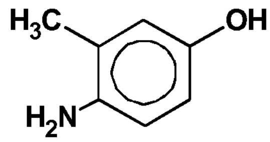

und 4-amino-2-(aminomethyl)-phenol

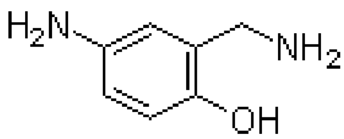

Die Komponenten a und b liegen im Gewichtsverhältnis zueinander von 6:1 bis 1:1,5, insbesondere im Verhältnis von 5: 1 bis 1: 1, vor.

Besonders bevorzugt ist erfindungsgemäß die Kombination von N, N-Diethylhydroxylamin (Komponente a) und 4-Amino-3-methylphenol (Komponente b).

**Messmethode:**

Die Messung der Sauerstoffkonzentration wurde mit dem Messgerät Sensor InPro 6800 von METTLER TOLEDO durchgeführt.

Mettler-Toledo InPro 6800 Sensoren dienen zur Inline-Messung des Sauerstoffpartialdrucks in Flüssigkeiten und Gasen.

Die $0_2$ Sensoren InPro 6800 mit integriertem Temperaturfühler dienen zur Bestimmung von Sauerstoff.

**Funktionsprinzip**

Der InPro 6800 basiert auf der polarographischen $O_2$-Messung nach Clark, die wie folgt zusammengefasst werden kann:

Der Clark-Sensor besteht aus Arbeitselektrode (Kathode), Gegen-/Referenzelektrode (Anode) und einer sauerstoffdurchlässigen Membran, welche die Elektroden vom Messmedium trennt.

Über den Transmitter wird eine konstante Spannung an die Kathode angelegt, um den Sauerstoff zu reduzieren. Die Sauerstoffmoleküle diffundieren vom Messmedium durch die Membran zu den Elektroden und werden an der mit Spannung beaufschlagten Kathode reduziert. Gleichzeitig findet an der Anode eine Oxidation statt, bei der das Anodenmetall (Silber) als Silberionen in den Elektrolyt abgegeben wird. Dadurch wird der Elektrolyt leitend und ein Strom fließt zwischen Anode und Kathode (Ionen-Leitfähigkeit). Der erzeugte Strom wird vom Transmitter gemessen und ist

proportional zum Sauerstoffpartialdruck ($pO_2$) im Messmedium.

Reaktion an der Kathode:

$$O_2 + 2\ H_2O + 4e^- \rightarrow 4\ OH$$

Reaktion an der Anode:

$$4\ Ag + 4\ Cl^- \rightarrow 4\ AgCl + 4e^-$$

**Erfindungsgemäße Beispiele:**

In einem mit vollentsalztem Wasser (Leitfähigkeit < 1 μS/cm) gefüllten Kolben, in dem die überstehende Gasmenge minimal ist, wird das Sauerstoffbindemittel zugegeben und nach definierten Zeitpunkten die Sauerstoffkonzentration mittels Elektrode gemessen. Während des Versuches wurde die Lösung mit gereinigten Stickstoff beaufschlagt.
Die Messungen erfolgten bei einer Temperatur von 45 °C.
Der Relative Synergieeffekt RS der Mischung ergibt sich aus der gemessenen Sauerstoffreduktion $\Delta c_g[O_2](t)$ und der berechneten Sauerstoffreduktion $\Delta c_b[O_2](t)$ zum Zeitpunkt der Messung t gemäß:

$$RS = \Delta c_g[O_2](t) / \Delta c_b[O_2](t) - 1.$$

Ist RS > 0 liegt eine synergistische Wirkung vor, ist RS < 0 eine antagonistische Wirkung.
Dabei ergibt sich die gemessene Sauerstoffreduktion $\Delta c_g[O_2](t)$ aus der Differenz der Ausgangssauerstoffkonzentration $c_g[O_2](0)$ und der gemessenen Sauerstoffkonzentration zum jeweiligen Zeitpunkt der Messung $c_g[O_2](t)$:

$$\Delta c_g[O_2](t) = c_g[O_2](0) - c_g[O_2](t)$$

Die Ausgangssauerstoffkonzentration $c_g[O_2](0)$ betrug 7,1 mg/L.
Die berechnete Sauerstoffreduktion $\Delta c_b[O_2](t)$ ergibt sich aus dem gewichteten Mittel der gemessenen Sauerstoffreduktionen $\Delta c_g[O_2](A, t)$ und $\Delta c_g[O_2](B, t)$ der beiden Einzelkomponenten a und b alleine gemäß

$$\Delta c_b(t) = c(A)/60 \cdot \Delta c_g[O_2](A, t) + c(B)/60 \cdot \Delta c_g[O_2](B, t).$$

Dabei stellen c(A) und c(B) die Ausgangskonzentrationen der Komponenten a und b in der Mischung dar.

**Beispiel 1: Mischung aus N,N- Diethylhydroxylamin und 4-Aminophenol**

**Tabelle 1** gemessene Sauerstoffkonzentration $c_g[O_2]$ für Mischungen aus DEHA und 4-Aminophenol

| | DEHA | 4-Aminophenol | DEHA: 4-Aminophenol | $c_g[O_2]$(2min) | $c_g[O_2]$(4min) | $c_g[O_2]$(6min) |
|---|---|---|---|---|---|---|
| | [mg/L] | [mg/L] | | [mg/L] | [mg/L] | [mg/L] |
| $c_g[O_2](A, t)$ | 60 | 0 | 1:0 | 7 | 6,7 | 6,4 |
| | 50 | 10 | 5:1 | 6,2 | 4,8 | 5,3 |
| | 40 | 20 | 2:1 | 6,6 | 4,7 | 3,6 |
| | 30 | 30 | 1:1 | 6,3 | 3,8 | 2,4 |
| | 20 | 40 | 1:2 | 6,4 | 5,2 | 3,9 |
| | 10 | 50 | 1:5 | 6,1 | 3,7 | 2,6 |
| $c_g[O_2](B, t)$ | 0 | 60 | 0:1 | 6 | 2,3 | 1,1 |

**Tabelle 2:** Relative Synergie RM für Mischungen aus DEHA und 4-Aminophenol

| **Beispiel 2:** Mischung aus N,N-Diethylhydroxylamin und 4-Amino-3-methylphenol | | | | | |
|---|---|---|---|---|---|
| DEHA | 4-Aminophenol | DEHA: 4-Aminophenol | RS(2min) | RS(4min) | RS(6min) |
| [mg/L] | [mg/L] | [mg/L] | | | |
| 50 | 10 | 5:1 | 1,2 | 0,9 | 0,1 |
| 40 | 20 | 2:1 | 0,2 | 0,3 | 0,5 |
| 30 | 30 | 1:1 | 0,2 | 0,3 | 0,5 |
| 20 | 40 | 1:2 | -0,4 | -0,4 | -0,2 |
| 10 | 50 | 1:5 | -0,2 | -0,2 | -0,1 |

**Tabelle 3:** gemessene Sauerstoffkonzentration $c_g[O_2]$ für Mischungen aus N, N-Diethylhydroxylamin (DEHA) und 4-Amino-3-methylphenol

| | DEHA | 4-Amino-3-methylphenol | DEHA: 4-Amino-3-methylphenol | $c_g[O_2]$ (5min) | $c_g[O_2]$ (10min) | $c_g[O_2]$ (15min) |
|---|---|---|---|---|---|---|
| | [mg/L] | [mg/L] | | [mg/L] | [mg/L] | [mg/L] |
| $c_g$ $[O_2]$ (A, t) | 60 | 0 | 1:0 | 6,4 | 5,7 | 5,1 |
| | 57,14 | 2,86 | 20:1 | 6,2 | 5,6 | 5,4 |
| | 56,25 | 3,75 | 15:1 | 6,5 | 5,8 | 5,5 |
| | 54,55 | 5,45 | 10:1 | 6,4 | 5,6 | 5,2 |
| | 50 | 10 | 5:1 | 6 | 3,9 | 2,8 |
| | 40 | 20 | 2:1 | 5,3 | 3,8 | 2,6 |
| | 30 | 30 | 1:1 | 5,4 | 3,2 | 1,6 |
| | 20 | 40 | 1:2 | 6 | 4,5 | 2,6 |
| | 10 | 50 | 1:5 | 5,8 | 3,8 | 2,3 |
| $c_g$ $[O_2]$ (B, t) | 0 | 60 | 0:1 | 6,1 | 4,6 | 1,9 |

**Tabelle 4:** Relative Synergie RM für Mischungen aus N, N-Diethylhydroxylamin (DEHA) und 4-Amino-3-methylphenol

| DEHA | 4-Amino-3-methylphenol | DEHA: 4-Amino-3-methylphenol | RS(5min) | RS(10min) | RS(15min) |
|---|---|---|---|---|---|
| [mg/L] | [mg/L] | | | | |
| 57,14 | 2,86 | 20:1 | 0,1 | 0,0 | -0,2 |
| 56,25 | 3,75 | 15:1 | -0,2 | -0,2 | -0,2 |
| 54,55 | 5,45 | 10:1 | 0,0 | -0,1 | -0,2 |
| 50 | 10 | 5:1 | 0,2 | 0,9 | 0,6 |
| 40 | 20 | 2:1 | 1,3 | 0,8 | 0,4 |
| 30 | 30 | 1:1 | 1,0 | 0,9 | 0,5 |
| 20 | 40 | 1:2 | 0,3 | 0,2 | 0,0 |

(fortgesetzt)

| DEHA | 4-Amino-3-methylphenol | DEHA: 4-Amino-3-methylphenol | RS(5min) | RS(10min) | RS(15min) |
|---|---|---|---|---|---|
| [mg/L] | [mg/L] | | | | |
| 10 | 50 | 1:5 | 0,5 | 0,5 | 0,1 |

Für beide Mischungen von Komponente a (DEHA) und Komponente b (4-aminophenol; 4-amino-3-methylphenol) zeigt sich ein synergistischer Effekt (RS > 0) im Verhältnis von 5:1 bis 1:1.

Die erfindungsgemäße Mischung wird in der Regel in das Kesselspeisewasser zudosiert, zum Beispiel mengenproportional zum Kesselspeisewasser über eine Dosierpumpe. Die Dosierung der Mischung wird üblicherweise so eingestellt, dass im Kondensat und im Kesselwasser eine Mindestkonzentration des N, N-Diethylhydroxylamin nachgewiesen werden kann. Die Erfolgskontrolle kann durch Messung des Eisengehaltes oder durch Inspektion der Anlagenteile erfolgen.

## Patentansprüche

1. Synergistisches Sauerstoffbindemittel bestehend aus den Komponenten a und b im Verhältnis von 6:1 bis 1:1,5, wobei Komponente a ein Dialkylhydroxylamin ist welche die allg. Formel **(I)** aufweist

   **(I)** $HONR_2$

   und die Substituenten R gleich oder verschieden sein können, wobei R= $C_n H_{2n+1}$, mit n=1 bis 5 ist, Komponente b ein Arylphenolderivat der Formel **(III)**

   **(III)**

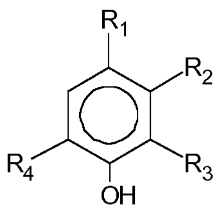

   ist, wobei $R_1$, $R_2$, $R_3$ und $R_4$ unabhängig voneinander a) $C_mH_{2m+1}$-N(-$R_5$)(-$R_6$) oder b) $OR_7$ oder c) $R_8$ darstellen, wobei mindestens ein $R_1$, $R_2$, $R_3$ und $R_4$ eine Gruppe $C_mH_{2m+}$1-N(-$R_5$)(-$R_6$) ist und $R_5$, $R_6$, $R_7$, $R_8$ jeweils unabhängig voneinander die Formel $C_nH_{2n+1}$ haben und m und n ganze Zahlen 0 bis 4 sind.

2. Sauerstoffbindemittel gemäß Anspruch 1, wobei die Komponenten a und b im Gewichtsverhältnis zwischen 6:1 und 1:1,5 in dem zu behandelnden Wasser vorliegen.

3. Sauerstoffbindemittel gemäß Anspruch 1, wobei die Komponente a, N, N-Diethylhydroxylamin (DEHA), ist.

4. Sauerstoffbindemittel gemäß Anspruch 1, wobei wobei $R_1$, $R_2$, $R_3$ und $R_4$ unabhängig voneinander a) $C_mH_{2m+}$1-N(-$R_5$)(-$R_6$) oder b) $OR_7$ oder c) $R_8$ darstellen, wobei mindestens ein $R_1$, $R_2$, $R_3$ und $R_4$ eine -$NH_2$ Gruppe ist. Dabei stellen $R_5$, $R_6$, $R_7$, $R_8$ jeweils unabhängig voneinander $C_nH_{2n+1}$ dar und m und n ganze Zahlen von 0 bis 4 sind.

5. Sauerstoffbindemittel gemäß Anspruch 4, wobei das Arylphenolderivat ausgewählt ist aus n-Aminophenolen mit n = 2,3,4, n-Amino-m-$C_oH_{2o+1}$-phenol oder n-Amino-m-$C_oH_{2o}NH_2$-phenol, wobei n = 2,3,4 und m = 2,3,4, wobei n ungleich m, und o eine ganze Zahl von 1 bis 4 darstellt.

6. Sauerstoffbindemittel gemäß Anspruch 6, **dadurch gekennzeichnet, dass** die Komponente b 4-Aminophenol oder 2-Aminophenol oder 4-Amino-3-methylphenol oder 3-Amino-4-methylphenol oder 4-Amino-2-(aminomethyl)-phenol ist.

7. Verwendung der Sauerstoffbindemittel nach den Ansprüchen 1 bis 6 in industriellen Dampferzeugern, Kesseln, geschlossenen Kühlsystemen, Fernwärmeanlagen oder Heizungskreisläufen.

## Claims

1. Synergistic oxygen binder consisting of the components a and b in a ratio of from 6:1 to 1:1.5, wherein component a is a dialkylhydroxylamine having the general formula **(I)**

**(I)** **$HONR_2$**

and the substituents R can be identical or different, where $R = C_nH_{2n+1}$, where n = 1 to 5,
component b is an arylphenol derivative of the formula **(III)**

**(III)**

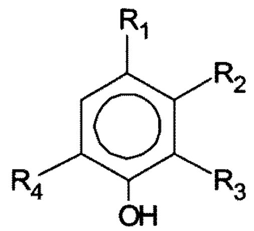

where $R_1$, $R_2$, $R_3$ and $R_4$ are each, independently of one another, a) $C_mH_{2m+1}$-N(-$R_5$)(-$R_6$) or b) $OR_7$ or c) $R_8$, where at least one $R_1$, $R_2$, $R_3$ and $R_4$ is a $C_mH_{2m+1}$-N(-$R_5$)(-$R_6$) group and $R_5$, $R_6$, $R_7$, $R_8$ each have, independently of one another, the formula $C_nH_{2n+1}$ and m and n are integers from 0 to 4.

2. Oxygen binder according to Claim 1, wherein the components a and b are present in a weight ratio in the range from 6:1 to 1:1.5 in the water to be treated.

3. Oxygen binder according to Claim 1, wherein component a is N,N-diethylhydroxylamine (DEHA).

4. Oxygen binder according to Claim 1, wherein $R_1$, $R_2$, $R_3$ and $R_4$ are each, independently of one another, a) $C_mH_{2m+1}$-N(-$R_5$)(-$R_6$) or b) $OR_7$ or c) $R_8$, where at least one $R_1$, $R_2$, $R_3$ and $R_4$ is a -$NH_2$ group and $R_5$, $R_6$, $R_7$, $R_8$ are each, independently of one another, $C_nH_{2n+1}$ and m and n are integers from 0 to 4.

5. Oxygen binder according to Claim 4, wherein the arylphenol derivative is selected from among n-aminophenols where n = 2, 3, 4, n-amino-m-$C_oH_{2o+1}$-phenol or n-amino-m-$C_oH_{2o}NH_2$-phenol, where n = 2, 3, 4 and m = 2, 3, 4 and n is not equal to m and o is an integer from 1 to 4.

6. Oxygen binder according to Claim 6, **characterized in that** the component b is 4-aminophenol or 2-aminophenol or 4-amino-3-methylphenol or 3-amino-4-methylphenol or 4-amino-2-(aminomethyl)phenol.

7. Use of the oxygen binders according to any of Claims 1 to 6 in industrial steam generators, boilers, closed cooling systems, district heating systems or heating circuits.

## Revendications

1. Liant de l'oxygène synergique constitué par les composants a et b en un rapport de 6:1 à 1:1,5, le composant a étant une dialkylhydroxylamine qui présente la formule générale (I)

(I) $HONR_2$

et les substituants R pouvant être identiques ou différents, avec $R = C_nH_{2n+1}$, avec n = 1 à 5,
le composant b étant un dérivé d'arylphénol de formule (III)

(III)

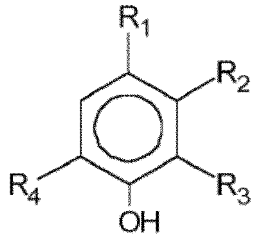

dans laquelle $R_1$, $R_2$, $R_3$ et $R_4$ représentent indépendamment les uns des autres a) $C_mH_{2m+1}$-N(-$R_5$)(-$R_6$) ou b) $OR_7$ ou c) $R_8$, au moins un $R_1$, $R_2$, $R_3$ et $R_4$ étant un groupe $C_mH_{2m+1}$-N(-$R_5$)(-$R_6$) et $R_5$, $R_6$, $R_7$, $R_8$ ayant chacun indépendamment les uns des autres la formule $C_nH_{2n+1}$ et m et n étant des nombres entiers de 0 à 4.

**2.** Liant de l'oxygène selon la revendication 1, dans lequel les composants a et b sont présents en un rapport en poids compris entre 6:1 et 1:1,5 dans l'eau à traiter.

**3.** Liant de l'oxygène selon la revendication 1, dans lequel le composant a est la N,N-diéthylhydroxylamine (DEHA).

**4.** Liant de l'oxygène selon la revendication 1, dans lequel $R_1$, $R_2$, $R_3$ et $R_4$ représentent indépendamment les uns des autres a) $C_mH_{2m+1}$-N(-$R_5$)(-$R_6$) ou b) $OR_7$ ou c) $R_8$, au moins un $R_1$, $R_2$, $R_3$ et $R_4$ étant un groupe $-NH_2$ et $R_5$, $R_6$, $R_7$, $R_8$ représentant chacun indépendamment les uns des autres $C_nH_{2n+1}$ et m et n étant des nombres entiers de 0 à 4.

**5.** Liant de l'oxygène selon la revendication 4, dans lequel le dérivé d'arylphénol est choisi parmi les n-aminophénols avec n = 2, 3, 4, le n-amino-m-$C_oH_{2o+1}$-phénol ou le n-amino-m-$C_oH_{2o}NH_2$-phénol, avec n = 2, 3, 4 et m = 2, 3, 4, n étant différent de m, et o représentant un nombre entier de 1 à 4.

**6.** Liant de l'oxygène selon la revendication 6, **caractérisé en ce que** le composant b est le 4-amino-phénol ou le 2-aminophénol ou le 4-amino-3-méthylphénol ou le 3-amino-4-méthylphénol ou le 4-amino-2-(aminométhyl)-phénol.

**7.** Utilisation du liant de l'oxygène selon les revendications 1 à 6, dans des générateurs de vapeur industriels, des chaudières, des systèmes de refroidissement fermés, des installations de chauffage urbain ou des circuits chauffants.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3983048 A
- US 4728497 A
- US 4067690 A
- EP 1619272 A1
- US 4626411 A